(19) Europäisches Patentamt / European Patent Office / Office européen des brevets

(11) **EP 1 635 604 B1**

(12) **EUROPEAN PATENT SPECIFICATION**

(45) Date of publication and mention
of the grant of the patent:
**18.06.2008 Bulletin 2008/25**

(51) Int Cl.:
*H04Q 11/00* $^{(2006.01)}$

(21) Application number: **04021449.6**

(22) Date of filing: **09.09.2004**

(54) **Scheduling of wavelengths with the least used channel in optical burst switched networks**

Ablauffolgeplanung von Wellenlängen mit dem wenigst gebrauchten Kanal in optischen Netzwerken mit Burstschaltung

Ordonnement de longeur d'ondes avec le canal le moins utilisé dans des réseaux optiques avec commutation en rafale

(84) Designated Contracting States:
**DE FR GB IT**

(43) Date of publication of application:
**15.03.2006 Bulletin 2006/11**

(73) Proprietor: **Nokia Siemens Networks GmbH & Co. KG**
**81541 München (DE)**

(72) Inventor: **De Vega Rodrigo, Miguel**
**1200 Woluwe St. Lambert,**
**Brussels (BE)**

(56) References cited:
**EP-A2- 1 089 498**          **EP-A2- 1 401 232**

• KAHEEL A ET AL: "A strict priority scheme for quality-of-service provisioning in optical burst switching networks" PROCEEDINGS OF THE 8TH IEEEE SYMPOSIUM ON COMPUTERS AND COMMUNICATION, 2003, pages 16-21, XP010645997
• QIONG ZHANG ET AL: "Early drop and wavelength grouping schemes for providing absolute qos differentiation in optical burst-switched networks" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 2694-2698, XP010677601 ISBN: 0-7803-7974-8
• HE J J ET AL: "A NOVEL ROUTING AND SWITCHING STRATEGY BASED ON PACKET FLOWS IN OPTICAL IP NETWORKS" PROCEEDINGS OF THE EUROPEAN CONFERENCE ON NETWORKS AND OPTICAL COMMUNICATIONS 2000. NOC 2000. WDM AND PHOTONIC NETWORKS, PROCEEDINGS OF THE EUROPEAN CONFERENCE ON NETWORKS AND OPTICAL COMMUNICATIONS. NOC, AMSTERDAM : IOS PRESS, NL, vol. PRT 1 OF 2, 2000, pages 70-77, XP000993828 ISBN: 1-58603-068-X

**Description**

APSON (Adaptive Path Switched Optical Networks) networks, similarly to OBS (Optical Burst Switching) networks, makes use of signalling protocols such as JET, Horizon or JIT in order to reserve a certain bandwidth for the transmission of a data flow. Adaptive optical networks consider alternative routes to determine the shortest path depending on the state of the network. The data flow in an Adaptive optical network may be a burst, plus possibly some IP packets.

However, at the time the reservation request arrives at a switch, there might be several available (free) wavelengths to reserve. Therefore, it remains for each switch to decide to which wavelength an outgoing data flow should actually be assigned. This is known as the *wavelength assignment* or the *wavelength scheduling* problem.

A wavelength scheduling algorithm decides which wavelength should be used to transfer a data flow from the different wavelengths which are temporarily available (i.e., unused) in a switch. Problematically, wavelength scheduling algorithms have a great impact on optical network performance since they can severely influence the blocking probability and, therefore, the throughput of the network.

Several scheduling algorithms for OBS networks have been described in the literature. The most trivial wavelength scheduling algorithm randomly chooses a wavelength in order to transmit the data flow from the set of available wavelengths. Another very simple method is the first fit (FF) algorithm, which performs a round-robin search of available wavelengths and assigns the first free wavelength found. These two algorithms are rather primitive and may lead to a high blocking probability.

Other algorithms for OBS networks which lead to a lower blocking probability have been described in the literature such as the *latest unscheduled channel* (LAUC) algorithm or the latest *available unused channel with void filling* (LAUC-VF) algorithm. Both of these aim at reducing the gaps between consecutive bursts. Generally speaking, in OBS networks the shorter the gaps between consecutive bursts, the better the scheduling algorithm is.

"A strict priority scheme for quality-of-service provisioning in optical burst switching networks" by Ayman Kaheel and Hussein Alnuweiri, Proceedings of the 8th IEEE Symposium on Computers and Communication, 2003, pages 16 through 21, proposes a scheme for provisioning quality-of-service in IP-over-WDM networks that provides strict priority for high priority traffic by dropping reservations belonging to lower priority traffic.

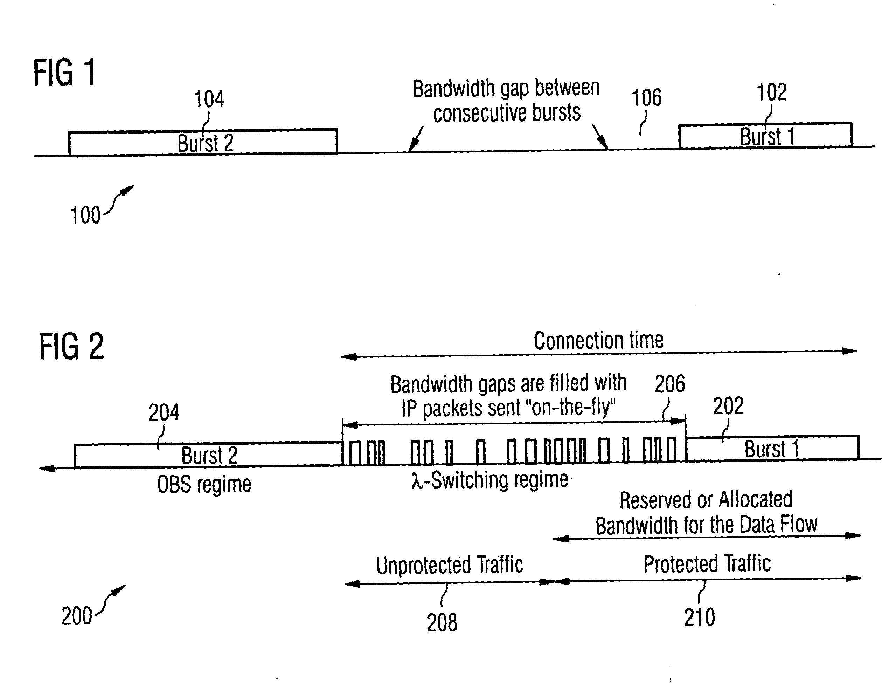

Bandwidth gaps are fractions of bandwidth and, therefore, are dead zones, since they cannot be used for the transmission of a burst. Naturally, the less gaps there are and the shorter the gaps are, the more efficient the bandwidth use is. This leads to a lower blocking probability and to a higher throughput. This can be seen from timing diagram 100 of Figure 1, wherein a Burst 1 is separated from a Burst 2(104) by a bandwidth gap 106.

APSON networks create a whole new problem to the wavelength scheduling issue. In actuality, the gaps between consecutive bursts are naturally filled with IP packets. In fact, conceptually speaking there is no such thing as gaps. This is more clearly seen in the timing diagram 200 of Figure 2, wherein the Burst 1 (202) is separated by the Burst 2 by IP packets sent "on-the-fly" (206). From this it is clearly seen that APSON networks do not have bandwidth gaps in the sense that "gaps" no data have transmitted in the gaps.

Therefore, even the most efficient scheduling algorithms developed for OBS networks (LAUC, LAUC-VF) cannot be used in APSON networks since they are focused on the reduction of such bandwidth gaps between consecutive bursts. Such an implementation would delete the IP packets transmitted in the "gap". Certainly, the traditional random and FF scheduling algorithms could be used in APSON as well, but as in OBS networks, they would lead to a poor network performance in terms of blocking probability and throughput.

Therefore in order to improve this situation, a *new generation* of APSON-specific scheduling algorithms is required. This invention aims at setting the basis and basic concepts for this new generation of algorithms.

OBJECTS & SUMMARY OF THE INVENTION

The idea of the invention is to design a wavelength scheduling algorithm that breaks the connection with the lowest traffic intensity in order to establish the requested incoming connection. Therefore, the traffic intensity on a link is identified as the most sensitive factor in terms of network performance that should be taken into account by a wavelength scheduling algorithm in APSON. By contrast, the length of the gaps was identified as the most sensitive factor in OBS networks.

The broken connection is chosen according to the invention from the set of connections which are sending traffic for which no bandwidth has been allocated. That is, the set of connections which are sending unprotected IP packets in the λ-switching regime (see 208, figure 2). This is in contrast to the protected IP packets 210 (Figure 2). The idea is to break the connection that sends less information, since this will have the smallest impact on the network performance in terms of blocking probability and network throughput.

The invention further defines a specific wavelength scheduling algorithm (referred to herein as LUC), which implies the definition of a suitable method to measure the traffic intensity in a link (so that the wavelength scheduling algorithm can take the decision) and of forwarding this information across the optical switches in the network.

The invention, thus, realizes that the most efficient wavelength scheduling algorithms for OBS networks do not perform well on APSON. To elaborate a new generation of wavelength scheduling algorithms based on a novel concept of choosing the wavelength with the lowest instantaneous connection throughput (ICT). The invention report goes further and defines in detail one of these new generation wavelength scheduling algorithms (the LUC). This comprises the following inventive steps: to define exactly the ICT and to describe a method to easily measure it. Using the ICT it is possible with the invention to describe a mechanism to make the ICT information available to the network switches.

DETAILED DESCRIPTION OF THE PREFERRED EMBODIMENTS

In an APSON network which has been running long enough to reach a steady-state, at any given time there are two kinds of connections which may be running through a switch, namely, *unbreakable* and *breakable* connections. Unbreakable connections are those connections which are still transmitting the data for which bandwidth has been allocated and reserved (e.g. through the JET, JIT or Horizon protocols). These connections cannot be touched by the wavelength scheduling algorithm. Breakable connections are those connections which already had sent the data for which bandwidth had been reserved and which are currently sending unprotected packets on the λ-switching regime (see 208, Figure 2).

When a connection request arrives at a switch, the wavelength scheduling algorithm chooses among the breakable connections one connection to break. The wavelength associated to the broken connection is then used in order to transfer the data of the incoming requested connection. The decision of the wavelength scheduling algorithm should minimize the blocking probability and therefore maximize the network throughput.

The main idea of the invention is to identify the *instantaneous connection throughput* (ICT) as the most sensitive factor to be taken into account by a wavelength scheduling algorithm in APSON, just as the length of the gaps was identified as the most sensitive factor in OBS networks. The ICT is a measure of the average traffic intensity on a certain wavelength. The goal of the wavelength scheduling algorithm is to choose among the breakable connections the connection with the lowest ICT. In other words, the philosophy is to break the connection that sends less information, since this will have the smallest impact on the network performance in terms of blocking probability and network throughput.

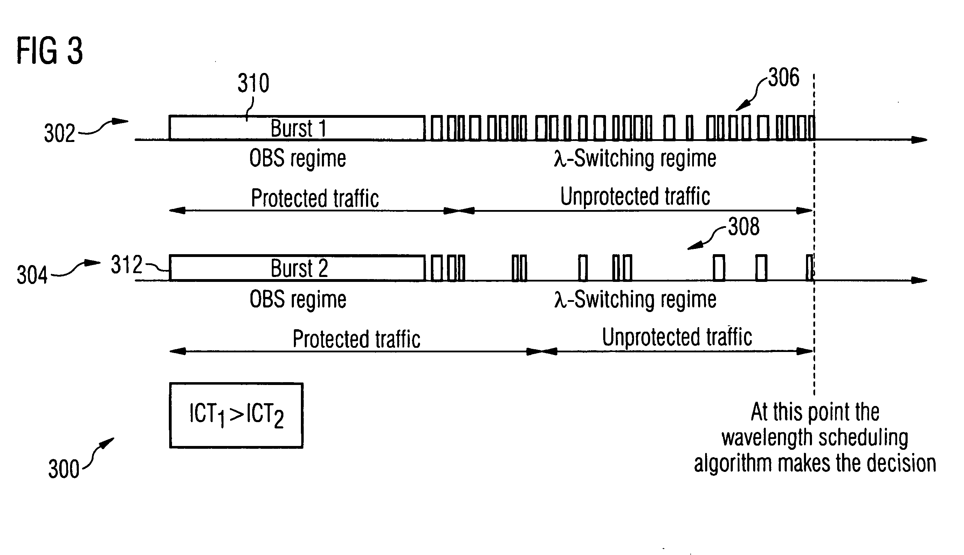

In the example 300 illustrated by Figure 3, the wavelength scheduling algorithm chooses between two wavelengths (302,304) in order to send an incoming connection request.

Wavelength 1 (302) transfers a high traffic load and, therefore has a relatively high ICT 306, whereas wavelength 2 (304) is transfers less traffic and, therefore, has a relatively low ICT 308. Consequently, the wavelength scheduling algorithm decides to use wavelength 2 (304) for the incoming connection. This will lead to a lower blocking probability and a higher network throughput than if wavelength 1 (302) had been chosen to carry the traffic of the incoming connection.

Now, an example of the operation of the invention according to Figure 3 will be provided. Wavelength 1 (302) carries higher traffic intensity 306. Therefore, *Burst 1 (310)* is formed in less time than *Burst 2 (312)* and/or it is bigger, which leads to the following inequality: ICT1 > ICT2. According to this, the wavelength scheduling algorithm decides to use the resources of wavelength 2 (304), since this decision leads to a higher network performance in terms of blocking probability and throughput. Advantageously, if both wavelengths carry the same traffic intensity blocking one of them leads to more IP packets which cannot be transmitted, compared to the case in which one wavelength carries heavy traffic and the other almost no traffic.

Next, the details of the least used channel wavelength scheduling algorithm will be discussed in the sense described above, which is referred herein as the least used channel wavelength scheduling algorithm (LUC). The first task is to develop a method to measure the ICT and, for that matter, a more precise definition of the ICT itself.

As mentioned above, the ICT should reflect the average traffic intensity over a certain wavelength. The average traffic intensity can be calculated with a moving average algorithm with a predetermined window size. It is important that ICT is defined at the right time scale, that is, that the size of the window of the moving average is not too large or too small. If the ICT defined is too large, it would not capture the variability of the traffic intensity correctly. If the ICT is too small, it would be excessively sensitive to local changes on the traffic intensity.

A connection in APSON begins with the transmission of a burst. The proposed method to measure the ICT of a connection consists on calculating the quotient of the size of the burst which is sent at the beginning of the connection divided by the time it took the edge node to accumulate the burst. The ICT is defined according to the invention by Equation 1 as follows:

$$ICT = \frac{B}{t_B}, \quad \text{Equation 1}$$

where B is the burst size and $t_B$ is the burst formation time. Thus, Equation 1 provides a measure of the average traffic intensity calculated with a moving average with a window equivalent to the burst formation time.

Now, with an Equation for the ITC, the invention proposes the following LUC wavelength scheduling algorithm. When an edge node generates a burst of size B in a time $t_B$, the ICT is calculated (ICT = B / $t_B$). Next, when the edge node sends a connection request, the header of the request contains the ICT. With the header request the ICT information is sent to the optical switches along the path. As a next step, each switch keeps track of a lookup table of the ongoing connections and of their respective ICT values (equivalently in a centralized solution, the central unit keeps track of this information). The table contains as well whether a connection is breakable or unbreakable. At the beginning all wavelengths are initialized with a breakable connection with an ICT = 0. When an optical switch receives the connection request it breaks the breakable connection with the lowest associated ICT. The entry on the lookup table is replaced with the values of the incoming connection.

The instant invention provides a new manner of determining the ITC and providing a new wavelength scheduling algorithm solution. The invention provides merely one definition of the ICT and other methods to measure the ITC are certainly within the present invention. It follows that other ICT definitions would yield other wavelength scheduling algorithms.

Advantageously, the invention is simple and does not require complex processing at the optical cross connectors, since the decision is made based on finding the minimum value of a set of values. Further, the invention is based on information easy to obtain and measure, since the ICT can be very easily calculated at the edge nodes by measuring the burst size and the burst formation time. The invention also reduces the blocking probability and increases the throughput in the network compared to other state-of-the-art wavelength scheduling algorithms. The state-of-the-art algorithms were specifically designed for OBS networks which have a different functionality than APSON and, therefore, are obsolete. The invention is also advantageous as it profits from variable (e.g. self-similar) traffic as described above with reference to Figure 3.

**Claims**

1. A method for determining a wavelength (304) to be utilized to transfer a data flow amongst different wavelengths available (302, 304) to an adaptive path switched optical network, wherein data packets (206) are sent on-the-fly during gaps (106) in transmission bursts (102, 104) both as protected (210) and unprotected data (208), comprising:

   determining an amount of average traffic intensity ICT for a particular wavelength (302, 304), the average traffic intensity ICT being determined according to the equation:

   $$ICT = B / t_B$$

   wherein, B is a burst size and $t_B$ is a burst formation time of the particular wavelength (302, 304),
selecting as a breakable connection a connection that is currently transmitting unprotected data packets (208) on the particular wavelength (302, 304) for which bandwidth has been allocated and reserved and has the least amount of traffic intensity ICT in comparison with other connections.

2. The method according to claim 1, further comprising transmitting the data flow on the selected breakable connection.

3. The method according to any of the preceding claims,
wherein the measure of average traffic intensity ICT is determined using a moving average with a predetermined window size.

4. The method according to claim 2, further comprising selecting the predetermined window size in order to sufficiently capture a variability of a traffic intensity for the particular wavelength (302, 304).

5. The method according to claim 2, further comprising selecting the predetermined window size in order that the predetermined window size is not excessively sensitive to local changes of traffic intensity.

6. A system adapted to determine a wavelength (304) to be utilized to transfer a data flow amongst different wavelengths (302, 304) available to an adaptive path switched optical network, wherein data packets (206) are sent on-the-fly during gaps (106) in transmission bursts (102, 104) both as protected (210) and unprotected (208) data, comprising an optical switch adapted to determine
an amount of average traffic intensity ICT for a particular wavelength (302, 304), and
a breakable connection that is currently transmitting unprotected data packets (208) on a wavelength (304) for which bandwidth has been allocated and reserved and that has a least amount of average traffic intensity ICT in comparison with other connections,
wherein, the optical switch is adapted to select the breakable connection for transmitting the data flow, wherein
the optical switch is adapted to determine the average traffic intensity ICT according to the equation:

$$ICT = B / t_B$$

wherein, B is a burst size and $t_B$ is a burst formation time of the particular wavelength (302, 304).

7. The system according to claims 6, wherein the optical switch is adapted to determine a lookup table of ongoing connections and of respective average traffic intensity values ICT.

**Patentansprüche**

1. Verfahren zum Bestimmen einer zum Übertragen eines Datenflusses zu benutzenden Wellenlänge (304) unter verschiedenen verfügbaren Wellenlängen (302, 304) zu einem adaptiven optischen Wegdurchschaltungsnetz, wobei Datenpakete (206) fliegend während Lücken (106) in Übertragungsbursts (102, 104) sowohl als geschützte (210) als auch ungeschützte Daten (208) gesendet werden, mit folgendem:

> Bestimmen eines Betrags einer Durchschnitts-Verkehrsstärke ICT für eine bestimmte Wellenlänge (302, 304), wobei die Durchschnitts-Verkehrsstärke ICT nach folgender Gleichung bestimmt wird:

$$ICT = B / t_B$$

> wobei B eine Burstgröße ist und $t_B$ eine Burst-Bildungszeit der bestimmten Wellenlänge (302, 304) ist,
> Auswählen als unterbrechbare Verbindung einer Verbindung, die gegenwärtig ungeschützte Datenpakete (208) auf der bestimmten Wellenlänge (302, 304) überträgt, für die Bandbreite zugeteilt und reserviert worden ist und im Vergleich mit anderen Verbindungen den geringsten Betrag an Verkehrsstärke ICT aufweist.

2. Verfahren nach Anspruch 1, weiterhin mit Übertragen des Datenflusses auf der ausgewählten unterbrechbaren Verbindung.

3. Verfahren nach einem der vorhergehenden Ansprüche, wobei das Maß der Durchschnitts-Verkehrsstärke ICT unter Verwendung eines gleitenden Mittelwerts mit einer vorbestimmten Fenstergröße bestimmt wird.

4. Verfahren nach Anspruch 2, weiterhin mit Auswählen der vorbestimmten Fenstergröße zur ausreichenden Erfassung einer Veränderbarkeit einer Verkehrsstärke für die bestimmte Wellenlänge (302, 304).

5. Verfahren nach Anspruch 2, weiterhin mit Auswählen der vorbestimmten Fenstergröße, damit die vorbestimmte Fenstergröße nicht übermäßig empfindlich für örtliche Änderungen der Verkehrsstärke ist.

6. System zum Bestimmen einer zum Übertragen eines Datenflusses und zu benutzenden Wellenlänge (304) unter verschiedenen verfügbaren Wellenlängen (302, 304) zu einem adaptiven optischen Wegdurchschaltungsnetz, wobei Datenpakete (206) fliegend während Lücken (106) in Übertragungs-Bursts (102, 104) sowohl als geschützte (210) als auch ungeschützte (208) Daten gesendet werden, mit einem Optoschalter zum Bestimmen
eines Betrags einer Durchschnitts-Verkehrsstärke ICT für eine bestimmte Wellenlänge (302, 304), und einer unterbrechbaren Verbindung, die gegenwärtig ungeschützte Datenpakete (208) auf einer Wellenlänge (304) überträgt, für die Bandbreite zugeteilt und reserviert worden ist und die im Vergleich mit anderen Verbindungen einen geringsten Betrag an Durchschnitts-Verkehrsstärke ICT aufweist,
wobei der Optoschalter zum Auswählen der unterbrechbaren Verbindung zum Übertragen des Datenflusses geführt ist, wobei der Optoschalter zum Bestimmen der Durchschnitts-Verkehrsstärke des ICT nach folgender Gleichung ausgeführt ist:

$$ICT = B / t_B$$

wobei B eine Burstgröße ist und $t_B$ eine Burstbildungszeit für die bestimmte Wellenlänge (302, 304) ist.

7. System nach Anspruch 6, wobei der Optoschalter zum Bestimmen einer Nachschlagetabelle bestehender Verbindungen und jeweiliger Durchschnitts-Verkehrsstärkewerte ICT ausgeführt ist.

**Revendications**

1. Procédé pour déterminer une longueur d'onde (304) destinée à être utilisée pour le transfert d'un flux de données parmi différentes longueurs d'onde disponibles (302, 304) pour un réseau optique commuté à chemin adaptatif, dans lequel des paquets de données (206) sont envoyés à la volée pendant des trous (106) dans les rafales de transmission (102, 104) à la fois en tant que données protégées (210) et en tant que données non protégées (208), comprenant :

> la détermination d'une valeur d'intensité de trafic moyenne ICT pour une longueur d'onde particulière (302, 304), l'intensité de trafic moyenne ICT étant déterminée selon l'équation :

$$ICT = \frac{B}{t_B}$$

dans laquelle B est une taille de rafale et $t_B$ est un temps de formation de rafale de la longueur d'onde particulière (302, 304),

la sélection, en tant que connexion susceptible d'être rompue, d'une connexion transmettant actuellement des paquets de données non protégés (208) sur la longueur d'onde particulière (302, 304) pour laquelle une bande passante a été allouée et réservée et ayant la moins grande valeur d'intensité de trafic ICT comparée à d'autres connexions.

2. Procédé selon la revendication 1, comprenant, en outre, la transmission du flux de données sur la connexion susceptible d'être rompue sélectionnée.

3. Procédé selon l'une quelconque des revendications précédentes, dans lequel la mesure de l'intensité de trafic moyenne ICT est déterminée en utilisant une moyenne mobile avec une taille de fenêtre prédéterminée.

4. Procédé selon la revendication 2, comprenant, en outre, la sélection de la taille de fenêtre prédéterminée de manière à suffisamment capter une variabilité d'une intensité de trafic pour la longueur d'onde particulière (302, 304).

5. Procédé selon la revendication 2, comprenant, en outre, la sélection de la taille de fenêtre prédéterminée de manière à ce que la taille de fenêtre prédéterminée ne soit pas excessivement sensible à des changements locaux d'intensité de trafic.

6. Système adapté pour déterminer une longueur d'onde (304) destinée à être utilisée pour le transfert d'un flux de données parmi différentes longueurs d'onde (302, 304) disponibles pour un réseau optique commuté à chemin adaptatif, dans lequel des paquets de données (206) sont envoyés à la volée pendant des trous (106) dans des rafales de transmission (102, 104) à la fois en tant que données protégées (210) et données non protégées (208), comprenant un commutateur optique adapté pour déterminer une valeur d'intensité de trafic moyenne ICT pour une longueur d'onde particulière (302, 304) et une connexion susceptible d'être rompue transmettant actuellement des paquets de données non protégés (208) sur une longueur d'onde (304) pour laquelle une bande passante a été allouée et réservée et ayant la moins grande valeur d'intensité de trafic moyenne ICT comparée à d'autres connexions, dans lequel le commutateur optique est adapté pour sélectionner la connexion susceptible d'être rompue pour transmettre le flux de données,

dans lequel le commutateur optique est adapté pour déterminer l'intensité de trafic moyenne ICT selon l'équation :

$$ICT = \frac{B}{t_B}$$

dans laquelle B est une taille de rafale et $t_B$ est un temps de formation de rafale de la longueur d'onde particulière (302, 304).

7. Système selon la revendication 6, dans lequel le commutateur optique est adapté pour déterminer une table de consultation de connexions en cours et de valeurs d'intensité de trafic moyennes ICT respectives.

# FIG 1

104

Bandwidth gap between
consecutive bursts    106    102

Burst 2

Burst 1

100

EP 1 635 604 B1

# FIG 2

Connection time

Bandwidth gaps are filled with    206
IP packets sent "on-the-fly"    202

204

Burst 2

Burst 1

OBS regime    λ-Switching regime

Reserved or Allocated
Bandwidth for the Data Flow

Unprotected Traffic    Protected Traffic

200    208    210

## FIG 3

302 — Burst 1 310 306
OBS regime λ-Switching regime

Protected traffic Unprotected traffic

304 — 312 Burst 2 308
OBS regime λ-Switching regime

Protected traffic Unprotected traffic

$ICT_1 > ICT_2$

At this point the
wavelength scheduling
algorithm makes the decision

300

EP 1 635 604 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AYMAN KAHEEL ; HUSSEIN ALNUWEIRI.** A strict priority scheme for quality-of-service provisioning in optical burst switching networks. *Proceedings of the 8th IEEE Symposium on Computers and Communication,* 2003, 16-21